# EUROPÄISCHE PATENTANMELDUNG

(11) **EP 3 537 006 A1**
(43) Veröffentlichungstag der Anmeldung: **11.09.2019**
(21) Anmeldenummer: 19152286.1
(22) Anmeldetag: 17.01.2019
(51) Int. Cl.: F16H 57/04, F16H 57/08, F16H 1/28

(54) **PLANETENGETRIEBE UND FLUGTRIEBWERK MIT EINEM PLANETENGETRIEBE**

(30) Priorität: 25.01.2018 DE 102018101723
(71) Anmelder: Rolls-Royce Deutschland Ltd & Co KG, 15827 Blankenfelde-Mahlow (DE)
(72) Erfinder: Kurz-Hardjosoekatmo, Wolfram, 15827 Blankenfelde-Mahlow (DE); Wolf, Carsten, 15827 Blankenfelde-Mahlow (DE)
(74) Vertreter: Schmidt, Martin Michael

(57) **Zusammenfassung**

Es wird ein Planetengetriebe (5) beschrieben, das einen drehbaren Planetenträger (18) und eine Vorrichtung (20) zum Führen von Öl mit wenigstens einer gehäusefesten Ölauffangrinne (21) aufweist. Die Ölauffangrinne (21) umgibt zumindest einen Bereich des drehbaren Planetenträgers (18) in Umfangsrichtung. Zusätzlich ist in der Ölauffangrinne (21) während der Rotation des Planetenträgers (18) von diesem abgeschleudertes Öl sammelbar. Das Öl ist in Einbaulage der Ölauffangrinne (21) von der am Öl angreifenden Schwerkraft in der Ölauffangrinne (21) in Richtung eines unteren Sammelbereiches (27) führbar, der mit einem Auslass (29) ausgebildet ist, durch den Öl aus dem Sammelbereich (27) der Ölauffangrinne (21) ableitbar ist. Zwischen einem in Einbaulage der Ölauffangrinne (21) oberen Bereich (28) der Ölauffangrinne (21) und dem Auslass (29) des Sammelbereiches (27) ist in Bezug auf die Drehrichtung (D) des Planetenträgers (18) vor dem Sammelbereich (27) wenigstens ein weiterer Auslass (32) vorgesehen, durch den Öl aus der Ölauffangrinne (21) führbar ist. Des Weiteren wird ein Flugtriebwerk (1) mit dem Planetengetriebe (5) vorgeschlagen.

## Beschreibung

Die vorliegende Offenbarung bezieht sich auf ein Planetengetriebe, das einen drehbaren Planetenträger und eine Vorrichtung zum Führen von Öl mit einer gehäusefesten Ölauffangrinne aufweist, gemäß der im Oberbegriff des Patentanspruches 1 näher definierten Art. Des Weiteren bezieht sich die vorliegende Offenbarung auf ein Flugtriebwerk mit einem solchen Planetengetriebe.

Während des Betriebes von Flugtriebwerken sammelt sich im Bereich von Hohlräumen, durch die ein Luft-Öl-Volumenstrom geführt wird, mit zunehmender Betriebsdauer Öl an. Derartige Hohlräume sind beispielsweise Lagerkammern oder Innenräume von Getrieben. Diese Ölansammlungen in Hohlräumen werden auch als Oil-Gulp-Volumen bezeichnet und sind bei der Auslegung eines Volumens eines Öltanks eines Flugtriebwerkes zu berücksichtigen. Das Oil-Gulp-Volumen ist eine zusätzliche Ölmenge, die im Betrieb eines Flugtriebwerks nicht in gewünschtem Umfang zum Kühlen und Schmieren nutzbar ist. Des Weiteren erhöht das Oil-Gulp-Volumen eine insgesamt im Öltank eines Flugtriebwerks zunächst vorzuhaltende Ölmenge, die ein großes Tankvolumen bedingt. Beides verursacht ein hohes Gewicht eines Flugtriebwerkes, was jedoch unerwünscht ist.

Das Öl tritt bei einer entsprechend ausgeführten Ölzuführung auf einem definierten Radius und jeweils über den Umfang des Hohlraumes gleichmäßig verteilt in die Hohlräume mit einem tangentialen Ölimpuls ein. Dies führt dazu, dass der jeweils eingeleitete Ölstrom bei einem Aufprall auf die den Hohlraum begrenzende Gehäusewand aufgrund des anfänglichen Impulses an der Begrenzungswand tangential entlangfließt. Dabei besteht die Möglichkeit, dass der Ölfluss an der Gehäusewand durch eine im Hohlraum auftretende Luftströmung weiter beschleunigt wird. Das Öl tritt aus den vorgenannten Hohlräumen über einen Auslass aus diesen aus. Oftmals befindet sich der Auslass eines solchen Hohlraumes in Einbaulage des Hohlraumes im tiefsten unteren Punkt des Hohlraumes. Das Öl wird dann von der angreifenden Gewichtskraft aus den Hohlräumen über die Auslässe ausgeleitet. Da der jeweils beim Eintritt in den Hohlraum vorliegende Impuls des Öls und auch die Luftströmung im Hohlraum gegebenenfalls der am Öl angreifenden Schwerkraft entgegenwirken, wird die vorstehend näher beschriebene unerwünschte Ölansammlung im Hohlraum begünstigt.

Um den Abfluss von Öl aus den Hohlräumen zu verbessern und das Oil-Gulp-Volumen zu reduzieren, wird versucht, den Ölvolumenstrom durch die Auslässe aus den Hohlräumen beispielsweise durch das Erzeugen eines Saugeffektes oder durch entsprechende Formgebung des Auslasses zu verbessern bzw. zu erhöhen. Aktuelle Maßnahmen zur Reduzierung des Oil-Gulp-Volumens in Hohlräumen konzentrieren sich vor allem auf Modifikationen des Auslasses aus den Hohlräumen. Diese Vorgehensweise ist jedoch nachteilhafterweise insbesondere bei größeren durch die Hohlräume zu führenden Ölvolumina nicht zielführend, um das Oil-Gulp-Volumen in gewünschtem Umfang gering zu halten.

Aus der EP 1 890 054 A1 ist eine Turbinenmaschine mit einem Planetengetriebe bekannt, das ein zweiteiliges Hohlrad umfasst. Das Hohlrad ist von einer ringförmigen Rinne umgeben, in die dem Planetengetriebe zugeführtes Öl im Betrieb eingeleitet wird.

Der vorliegenden Offenbarung liegt die Aufgabe zugrunde, ein Planetengetriebe, das einen drehbaren Planetenträger und eine Vorrichtung zum Führen von Öl mit einer gehäusefesten Ölauffangrinne aufweist, zur Verfügung zu stellen, mittels welchem ein Oil-Gulp-Volumen im Vergleich zu aus dem Stand der Technik bekannten Lösungen reduzierbar ist. Des Weiteren liegt der vorliegenden Offenbarung die Aufgabe zugrunde, ein kostengünstiges und durch ein geringes Bauteilgewicht gekennzeichnetes Flugtriebwerk zur Verfügung zu stellen.

Diese Aufgaben werden mit einem Planetengetriebe mit den Merkmalen des Patentanspruches 1 sowie mit einem Flugtriebwerk gemäß Patentanspruch 11 gelöst.

Gemäß einem ersten Aspekt weist das Planetengetriebe einen drehbaren Planetenträger und eine Vorrichtung zum Führen von Öl mit wenigstens einer gehäusefesten Ölauffangrinne auf. Die Ölauffangrinne umgibt zumindest einen Bereich des drehbaren Planetenträgers in Umfangsrichtung. Des Weiteren ist in der Ölauffangrinne während der Rotation des Planetenträgers von diesem abgeschleudertes Öl sammelbar.

Das Öl ist in Einbaulage der Ölauffangrinne von der am Öl angreifenden Schwerkraft in der Ölauffangrinne in Richtung eines unteren Sammelbereiches führbar. Der Sammelbereich ist mit einem Auslass ausgebildet, durch den Öl aus dem Sammelbereich der Ölauffangrinne ableitbar ist. Zusätzlich ist zur Vermeidung unerwünscht großer Ölansammlungen im Bereich der Ölauffangrinne zwischen einem in Einbaulage der Ölauffangrinne oberen Bereich der Ölauffangrinne und dem Auslass des Sammelbereiches in Bezug auf die Drehrichtung des Planetenträgers vor dem Sammelbereich wenigstens ein weiterer Auslass vorgesehen, durch den Öl aus der Ölauffangrinne führbar ist.

Über den weiteren Auslass ist auf konstruktiv einfache Art und Weise in der Ölauffangrinne in Richtung des Sammelbereiches abfließendes Öl bereits vor Erreichen des Sammelbereiches aus der Ölauffangrinne abführbar und somit aus dem zwischen der Ölauffangrinne und dem rotierenden Planetenträger begrenzten Hohlraum ausleitbar und beispielsweise einem Ölkreislauf eines Flugtriebwerkes zuführbar. Damit ist ein Oil-Gulp-Volumen im Bereich des Hohlraumes zwischen der Ölauffangrinne und dem drehbaren Planetenträger mit geringem Aufwand gegenüber an sich bekannten Lösungen reduziert.

Der vorliegenden Offenbarung liegt die Kenntnis zugrunde, dass durch den weiteren Auslass der Ölauffangrinne im Bereich der Ölauffangrinne gesammeltes Öl im Vergleich zu bekannten Lösungen über einen kurzen Strömungsweg wesentlich direkter und somit innerhalb kürzerer Betriebszeiten aus einem Hohlraum abführbar ist. Dadurch werden unerwünschte Strömungsverluste minimiert, die durch Leitungen oder andere Mittel verursacht werden. Dies führt letztendlich auf einfache Art und Weise zu der gewünschten Begrenzung von Ölansammlungen bzw. des Oil-Gulp-Volumens in Hohlräumen. Zusätzlich ist durch die Anordnung der Vorrichtung gemäß der vorliegenden Offenbarung auch eine unerwünschte Wechselwirkung mit weiteren Ölströmen anderer Ölverbraucher, die außerhalb der Ölauffangrinne geführt werden, auf einfache Art und Weise minimiert.

Bei einer weiteren vorteilhaften Ausführungsform des Planetengetriebes gemäß der vorliegenden Offenbarung ist ein radialer Abstand zwischen dem der Ölauffangrinne zugewandten Außenseite des drehbaren Planetenträgers und der Ölauffangrinne so ausgelegt, dass bei drehendem Planetenträger in dem von der Ölauffangrinne und dem Planetenträger begrenzten Umfangsbereich eine das Öl in der Ölauffangrinne in Drehrichtung des Planetenträgers führende Luftströmung auftritt. Damit ist wiederum auf einfache Art und Weise gewährleistet, dass das Öl innerhalb kurzer Betriebszeiten durch den weiteren Auslass aus der Ölauffangrinne ausgeleitet wird und unerwünscht hohe Ölansammlungen vermieden werden.

Zusätzlich hierzu oder alternativ dazu kann ein radialer Abstand zwischen dem der Ölauffangrinne zugewandten Außenseite des Planetenträgers und der Ölauffangrinne so ausgelegt sein, dass das Öl bei drehendem Planetenträger in dem von der Ölauffangrinne und dem Planetenträger begrenzten Umfangsbereich einen das Öl in der Ölauffangrinne in Drehrichtung des Planetenträgers führenden Impuls aufweist. Damit ist auch bei Vorliegen eines Unterdruckes im Bereich zwischen der Ölauffangrinne und der Außenseite des Planetenträgers gewährleistet, dass das Öl innerhalb kurzer Betriebszeiten wieder aus dem Bereich zwischen der Ölauffangrinne und dem Planetenträger ausgeleitet wird.

Der weitere Auslass weist bei einer vorteilhaften Ausführungsform des Planetengetriebes gemäß der vorliegenden Offenbarung eine auf der dem drehbaren Planetenträger zugewandten Innenseite der Ölauffangrinne vorgesehene Eintrittsöffnung, eine auf der dem drehbaren Planetenträger abgewandten Außenseite der Ölauffangrinne vorgesehene Austrittsöffnung und einen die Eintrittsöffnung und die Austrittsöffnung verbindenden Kanal auf. Zusätzlich ist vorgesehen, dass eine Strömungsgeschwindigkeit des Öls beim Durchströmen der Eintrittsöffnung, des Kanals und der Austrittsöffnung wenigstens annähernd gleich bleibt. Damit ist gewährleistet, dass der Impuls des Öls beim Austritt aus der Ölauffangrinne im Wesentlichen aufrechterhalten wird und eine unerwünschte Ansammlung von Öl bzw. ein unerwünscht hohes Oil-Gulp-Volumen mit geringem Aufwand vermieden wird.

Bei weiteren konstruktiv einfachen Ausführungsformen des Planetengetriebes gemäß der vorliegenden Offenbarung ist der weitere Auslass als eine im Wesentlichen tangential durch die ringförmige Ölauffangrinne verlaufende Bohrung oder als ein im Wesentlichen tangential durch die ringförmige Ölauffangrinne verlaufender Schlitz ausgeführt.

Ein Oil-Gulp-Volumen ist bei einer weiteren vorteilhaften Ausführungsform des Planetengetriebes gemäß der vorliegenden Offenbarung dadurch in gewünschtem Umfang begrenzbar, dass ein einen Bereich des Kanals und die Austrittsöffnung umfassender Austrittsbereich des weiteren Auslasses für das aus der Ölauffangrinne abzuführende Öl derart ausgeführt ist, dass das Öl aus dem weiteren Auslass in Richtung eines außerhalb der Ölauffangrinne vorgesehenen Ölsammelbereiches führbar ist. Der Ölsammelbereich ist in Einbaulage der Ölauffangrinne unterhalb der Ölauffangrinne angeordnet. Des Weiteren ist in den Ölsammelbereich auch über den Auslass aus der Ölauffangrinne austretendes Öl einleitbar.

Bei weiteren vorteilhaften Ausführungsformen des Planetengetriebes gemäß der vorliegenden Offenbarung ist wenigstens eine weitere Ölauffangrinne vorgesehen, die einen weiteren Bereich des drehbaren Planetenträgers und/oder einen Bereich eines weiteren drehbaren Bauteils in Umfangsrichtung umgibt. Dann sind unerwünscht große Ölansammlungen auf einfache Art und Weise unter anderem auch bei lediglich begrenzt zur Verfügung stehenden Bauräumen vermeidbar, innerhalb welchen jeweils eine Ölauffangrinne anordenbar ist.

Ist die Ölauffangrinne in radialer Richtung des Planetenträgers zwischen dem drehbaren Planetenträger und einem Getriebegehäuse angeordnet und drehfest mit dem Getriebegehäuse verbunden, weist das Planetengetriebe gemäß der vorliegenden Offenbarung wiederum einen konstruktiv einfachen und kostengünstigen Aufbau auf und es werden unerwünscht große Ölansammlungen im Bereich des Planetengetriebes mit geringem Aufwand vermieden.

Unerwünscht große Ölansammlungen werden bei einer weiteren vorteilhaften Ausführungsform des Planetengetriebes gemäß der vorliegenden Offenbarung dadurch vermieden, dass der Wert eines radialen Abstandes zwischen der Ölauffangrinne und dem drehbaren Planetenträger jeweils kleiner oder gleich dem Wert eines halben radialen Abstandes zwischen dem drehbaren Planetenträger und dem Getriebegehäuse ist.

Das Flugtriebwerk gemäß der vorliegenden Offenbarung ist mit einem vorstehend näher beschriebenen Planetengetriebe ausgebildet und daher kosten- und bauraumgünstig ausführbar, da aufgrund eines geringen Oil-Gulp-Volumens nur ein geringes Ölvolumen im Flugtriebwerk vorzuhalten ist und beispielsweise ein Öltank des Flugtriebwerkes im Vergleich zu aus der Praxis bekannten Lösungen mit geringerem Volumen auslegbar ist.

Sowohl die in den Patentansprüchen angegebenen Merkmale als auch die in den nachfolgenden Ausführungsbeispielen des Gegenstandes gemäß der vorliegenden Offenbarung angegebenen Merkmale sind jeweils für sich allein oder in beliebiger Kombination miteinander geeignet, den Gegenstand weiterzubilden.

Weitere Vorteile und vorteilhafte Ausführungsformen des Planetengetriebes gemäß der vorliegenden Offenbarung ergeben sich aus den Patentansprüchen und den nachfolgend unter Bezugnahme auf die Zeichnung prinzipmäßig beschriebenen Ausführungsbeispielen.

Es zeigt:
- Fig. 1: eine vereinfachte Schnittdarstellung eines Flugtriebwerkes mit einem Bläser und mit einer Niederdruckturbine, wobei der Bläser über ein Planetengetriebe mit der Niederdruckturbine in Verbindung steht;
- Fig. 2: eine schematisierte Einzelquerschnittansicht des Planetengetriebes gemäß Fig. 1 entlang einer in Fig. 3 näher gekennzeichneten Schnittebene II-II;
- Fig. 3: eine schematisierte Einzellängsschnittansicht des Planetengetriebes gemäß Fig. 1; und
- Fig. 4: eine Fig. 3 entsprechende Darstellung einer weiteren Ausführungsform des Planetengetriebes gemäß Fig. 1.

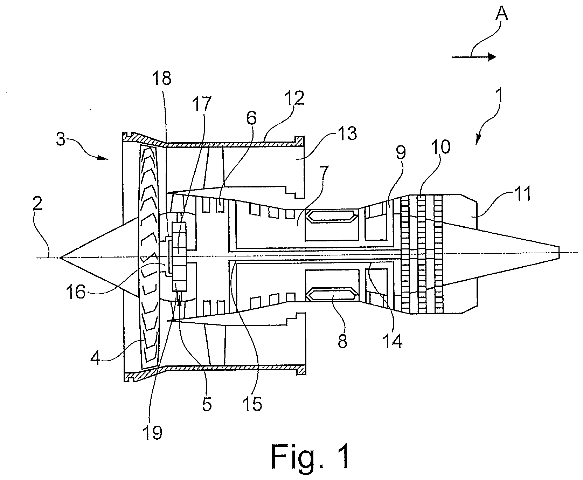

In Fig. 1 ist eine als Flugtriebwerk 1 eines Flugzeugs ausgeführte Strömungsmaschine mit einem Planetengetriebe 5 gezeigt. Das Flugtriebwerk 1 ist eine Turbomaschine, mit der das Planetengetriebe 5 vorteilhaft kombiniert werden kann. Aus dem Folgenden ergibt sich eindeutig, dass das Planetengetriebe 5 auch bei anderweitig ausgeführten Turbomaschinen, wie einem Propellerturbinen-Luftstrahltriebwerk bzw. einem Turboprop, eingesetzt werden kann.

Das Flugtriebwerk 1 weist eine Hauptdrehachse 2 auf. Des Weiteren umfasst das Flugtriebwerk 1 in axialer Strömungsrichtung A einen Lufteinlass 3, einen Bläser 4, das Planetengetriebe 5, einen Niederdruckverdichter 6, einen Hochdruckverdichter 7, eine Verbrennungseinrichtung 8, eine Hochdruckturbine 9, eine Niederdruckturbine 10 und eine Ausströmdüse 11. Eine Triebwerksgondel 12 umgibt das Flugtriebwerk 1 und begrenzt den Lufteinlass 3.

Das Flugtriebwerk 1 arbeitet in herkömmlicher Weise, wobei in den Lufteinlass 3 eintretende Luft durch den Bläser 4 beschleunigt wird, um zwei Luftströme zu erzeugen. Ein erster Luftstrom strömt in den Zwischendruckverdichter 6 und ein zweiter Luftstrom wird durch einen Nebenstromkanal 13 bzw. Bypasskanal geführt, um einen Antriebsschub bereitzustellen. Der Niederdruckverdichter 6 komprimiert den ihm zugeführten Luftstrom, bevor die Luft im Bereich des Hochdruckverdichters 7 weiter verdichtet wird.

Die aus dem Hochdruckverdichter 7 ausströmende verdichtete Luft wird in die Verbrennungseinrichtung 8 eingeleitet, wo eine Vermischung mit Kraftstoff erfolgt und das Kraftstoff-Luft-Gemisch verbrannt wird. Die entstehenden heißen Verbrennungsprodukte expandieren und treiben dabei die Hochdruckturbine 9 und die Niederdruckturbine 10 an, bevor sie über die Ausströmdüse 11 ausgeführt werden, um einen zusätzlichen Antriebsschub bereitzustellen. Die Hochdruckturbine 9 und die Niederdruckturbine 10 treiben mittels einer Hochdruckwelle 14 bzw. einer Niederdruckwelle 15 den Hochdruckverdichter 7 bzw. den Niederdruckverdichter 6 an. Die die Niederdruckturbine 10 mit dem Niederdruckverdichter 6 koppelnde Niederdruckwelle 15 ist über das ein Untersetzungsgetriebe darstellende Planetengetriebe 5 mit dem Bläser 4 gekoppelt. Ein über die Niederdruckwelle 15 am Planetengetriebe 5 anliegendes Antriebsmoment wird der Standübersetzung des Planetengetriebes 5 entsprechend angehoben und einer Bläserwelle 16 zugeführt. Wenn der Bläser 4 von der Niederdruckturbine 10 angetrieben wird, wird die Drehzahl der Niederdruckwelle 15 der Übersetzung des Planetengetriebes 5 entsprechend reduziert und die Bläserwelle 16 sowie der Bläser 4 mit dieser reduzierten Drehzahl und mit einem gegenüber dem an der Niederdruckwelle 15 anliegenden Drehmoment erhöhten Drehmoment angetrieben.

Bei der in Fig. 1 gezeigten Ausführung des Planetengetriebes 5 ist ein Sonnenrad 17 des Planetengetriebes 5 drehfest mit der Niederdruckwelle 15 und ein Planetenträger 18 des Planetengetriebes 5 drehfest mit der Bläserwelle 16 verbunden. Ein Hohlrad 19 des Planetengetriebes 5 ist gehäusefest angebunden. Drehbar am Planetenträger 18 gelagerte Planetenräder 40 kämmen sowohl mit dem Sonnenrad 17 als auch mit dem Hohlrad 19. Somit liegt eine so genannte epizyklische Ausführung des Planetengetriebes 5 vor. Unabhängig davon kann das Planetengetriebe 5 auch eine andere Ausführung eines Planetengetriebes aufweisen.

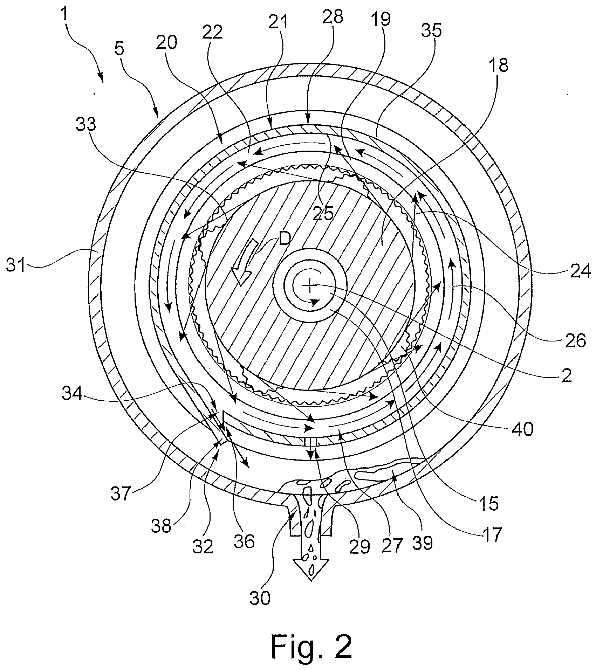

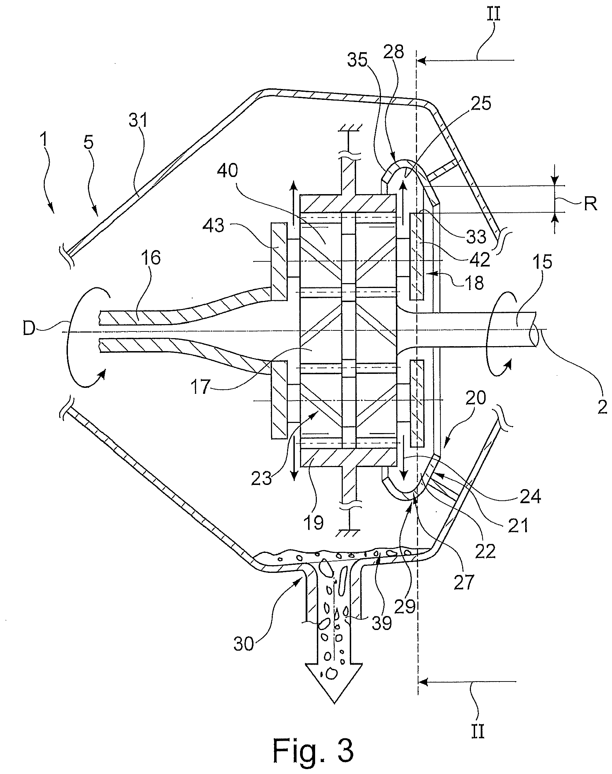

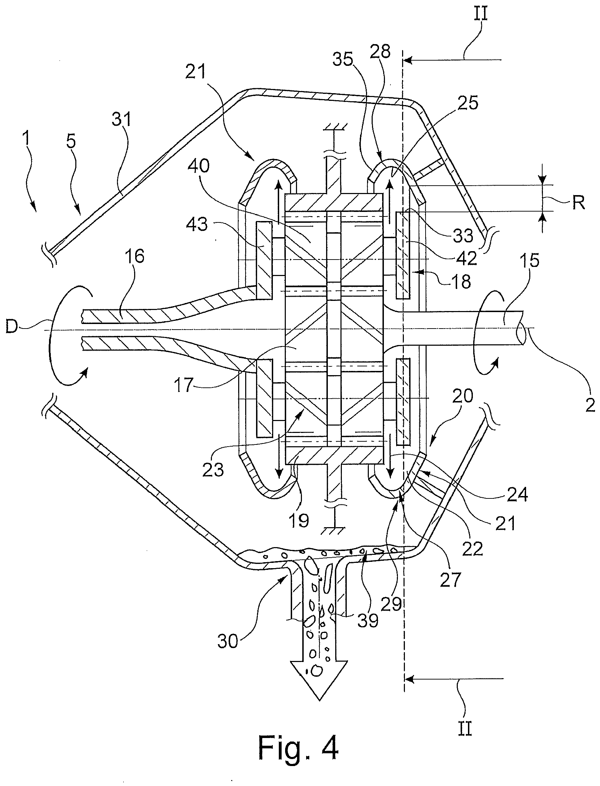

Fig. 2 zeigt eine Einzelquerschnittansicht des Planetengetriebes 5 gemäß Fig. 1 entlang einer in Fig. 3 bzw. Fig. 4 näher gekennzeichneten Schnittebene II-II. Das Planetengetriebe 5 ist zusätzlich mit einer Vorrichtung 20 zum Führen von Öl mit einer gehäusefesten Ölauffangrinne 21 ausgebildet. Die Ölauffangrinne 21 umgibt in Umfangsrichtung einen Bereich 42 des als drehbares Bauteil des Planetengetriebes 5 ausgeführten Planetenträgers 18, womit während der Rotation des Planetenträgers 18 von diesem abgeschleudertes Öl in der Ölauffangrinne 21 sammelbar ist. Hierfür begrenzt die Ölauffangrinne 21 eine dem Planetenträger 18 zugewandte und gegenüber diesem offene Ringnut 22, die in Fig. 3 näher dargestellt ist, die eine Einzellängsschnittansicht des Planetengetriebes 5 zeigt.

Im Betrieb des Flugtriebwerkes 1 und damit bei rotierendem Planetenträger 18 wird dem Planetengetriebe 5 über einen Ölzuführbereich 23 Öl zum Kühlen und Schmieren zugeführt. Aufgrund der Rotation des Planetenträgers 18 wird das zugeführte Öl in die durch die in Fig. 2 näher dargestellten Pfeile 24 angegebenen Richtungen zunächst im Wesentlichen tangential vom Planetenträger 18 abgeschleudert und trifft auf der die Ringnut 22 begrenzenden Innenseite 25 der Ölauffangrinne 21 auf.

Der vom Planetenträger 18 dem Öl aufgeprägte Impuls bewirkt, dass das Öl an der Innenseite 25 der Ölauffangrinne 21 den ebenfalls in Fig. 2 näher gezeigten Pfeilen 26 entsprechend in Umfangrichtung der Ölauffangrinne 21 und letztendlich in Richtung eines in Einbaulage der Ölauffangrinne 21 unteren Sammelbereiches 27 der Ölauffangrinne 21 strömt. Des Weiteren wird die Strömung des Öls in Richtung der Pfeile 26 ab Erreichen eines in Einbaulage der Ölauffangrinne 21 oberen Bereiches 28 auch aufgrund der am Öl angreifenden Schwerkraft in Richtung des Sammelbereiches 27 bewirkt. Dabei weisen der obere Bereich 28 und der Sammelbereich 27 der Ölauffangrinne 21 die in Fig. 2 und Fig. 3 dargestellte Position während eines Horizontalfluges eines mit dem Flugtriebwerk 1 ausgeführten Flugzeuges auf.

Der Sammelbereich 27 ist vorliegend im tiefsten Punkt des Sammelbereiches 27 mit einem Auslass 29 ausgebildet, über den Öl aus der Ölauffangrinne 21 bzw. der Ringnut 22 radial nach außen bzw. nach unten in Richtung eines Ablasses 30 des Getriebes 5 ausleitbar ist. Dabei entspricht der Ablass 30 einer Öffnung eines Getriebegehäuses 31 des Planetengetriebes 5, die mit einem nicht näher dargestellten Ölkreislauf des Flugtriebwerkes 1 in Verbindung steht. Über den Ölkreislauf des Flugtriebwerkes 1 sind weitere Verbraucher bzw. Bauteile oder Bereiche des Flugtriebwerkes 1 mit Öl beaufschlagbar. Derartige Bereiche stellen beispielsweise Lagerkammern, ein Hilfsgerätegetriebe und dergleichen dar.

Zusätzlich ist die Vorrichtung 20 zwischen dem oberen Bereich 28 der Ölauffangrinne 21 und dem Auslass 29 des Sammelbereiches 27 in Bezug auf eine Drehrichtung D des Planetenträgers 18 vor dem Sammelbereich 27 mit einem weiteren Auslass 32 ausgebildet, durch den Öl aus der Ölauffangrinne 21 in Richtung des Ablasses 30 führbar ist.

Ein radialer Abstand R zwischen dem der Ölauffangrinne 21 zugewandten Außenseite 33 des Planetenträgers 18 und der Innenseite 25 der Ölauffangrinne 21 ist so ausgelegt, dass bei drehendem Planetenträger 18 in dem von der Ölauffangrinne 21 und dem Planetenträger 18 begrenzten Umfangsbereich eine das Öl in der Ölauffangrinne 21 in Drehrichtung D des Planetenträgers 18 führende Luftströmung vorliegt. Dadurch wird erreicht, dass das Öl in der Ölauffangrinne 21 einen das Öl in Drehrichtung D des Planetenträgers 18 führenden Impuls aufweist.

Der weitere Auslass 32 umfasst eine auf der dem Planetenträger 18 zugewandten Innenseite 25 der Ölauffangrinne 21 vorgesehene Eintrittsöffnung 34, eine auf der dem Planetenträger 18 abgewandten Außenseite 35 der Ölauffangrinne 21 vorgesehene Austrittsöffnung 36 und einen die Eintrittsöffnung 34 und die Austrittsöffnung 36 verbindenden Kanal 37. Dabei sind die Eintrittsöffnung 34, der Kanal 37 und die Austrittsöffnung 36 so ausgeführt, dass eine Strömungsgeschwindigkeit des Öls beim Durchströmen der Eintrittsöffnung 34, des Kanals 37 und der Austrittsöffnung 36 wenigstens annähernd gleich bleibt und somit ein gewünscht schnelles Ableiten des Öls aus dem Planetengetriebe 5 in Richtung des Ölkreislaufes des Flugtriebwerkes 1 erreicht wird.

Des Weiteren ist ein einen Bereich des Kanals 37 und die Austrittsöffnung 36 umfassender Austrittsbereich 38 des weiteren Auslasses 32 für das aus der Ölauffangrinne 21 abzuführende Öl derart ausgeführt, dass das Öl aus dem weiteren Auslass 32 in Richtung eines außerhalb der Ölauffangrinne 21 vorgesehenen Ölsammelbereiches 39 führbar ist, der über den Ablass 30 mit dem Ölkreislauf des Flugtriebwerkes 1 in Verbindung steht. Hierfür sind der Verlauf des der Austrittsöffnung 36 zugewandten Bereichs des Kanals 37 und die Form der Austrittsöffnung 36 so ausgebildet, dass das Öl beim Austritt aus dem Austrittsbereich 38 direkt in Richtung des Ölsammelbereiches 39 geführt wird. Dabei ist der Ölsammelbereich 39 in Einbaulage der Ölauffangrinne 21 unterhalb der Ölauffangrinne 21 angeordnet. Des Weiteren ist über den Auslass 29 des Sammelbereiches 27 aus der Ölauffangrinne 21 austretendes Öl in den Ölsammelbereich 39 einleitbar.

Generell ist bei der Ausgestaltung und der Anordnung der Vorrichtung 20 um den Planetenträger 18 darauf zu achten, dass die Ölauffangrinne 21 möglichst nahe bzw. mit möglichst geringem radialen Abstand zu dem Bereich des Planetenträgers 18 anzuordnen ist. Dadurch wird das vom Planetenträger 18 abgeschleuderte Öl mit möglichst großem Impuls in die Ölauffangrinne 21 eingeleitet und anschließend in Richtung des weiteren Auslasses 29 in der Ölauffangrinne 21 geführt. Zusätzlich sammelt sich im Inneren des Getriebegehäuses 31 auch deshalb ein möglichst geringes Oil-Gulp-Volumen an, weil das vom Planetenträger 18 abgeschleuderte Öl nicht über den gesamten Umfang der Ölauffangrinne 21 bis zum Auslass 29 zu führen ist, bevor es aus der Ölauffangrinne 21 in Richtung des Ablasses 30 aus der Ölauffangrinne 21 ausleitbar ist.

Durch die Anordnung der Vorrichtung 20 wird auch verhindert, dass das vom Planetenträger 18 abgeschleuderte Öl direkt auf die Innenseite des Getriebegehäuses 31 auftrifft und im Vergleich zu der Anordnung der Vorrichtung 20 wesentlich längere Betriebszeiten verstreichen, bis das Öl von der Innenseite des Getriebegehäuses 31 über den Ablass 30 aus dem Planetengetriebe 5 in Richtung des Ölkreislaufes des Flugtriebwerkes 1 ausgeführt wird.

Generell besteht die Möglichkeit, die Vorrichtung im Bereich von Getrieben, Lagerkammern und weiteren mit einem Luft-Öl-Gemisch beaufschlagten Hohlräumen anzuordnen, innerhalb welchen ein rotierender Öleinlass vorgesehen ist.

Des Weiteren besteht auch die Möglichkeit, den weiteren Auslass 32 direkt mit dem Ablass 30 zu verbinden, um das im Planetengetriebe 5 im Betrieb sich ansammelnde Oil-Gulp-Volumen auf ein Minimum zu reduzieren.

Zusätzlich stellen sich die Vorteile der Vorrichtung 20 auch während Flugbetriebszuständen ein, während welchen sich das Flugtriebwerk 1 in einer Schräglage oder in einem wenigstens annähernd schwerelosen Flugbetriebszustand befindet. Des Weiteren wirkt die vorbeschriebene Funktionsweise der Vorrichtung 20 auch bei im Flugbetrieb auftretenden und am Öl angreifenden negativen G-Kräften, wie es beispielsweise während eines plötzlichen Absinkens der Flughöhe der Fall ist.

Fig. 4 zeigt eine Fig. 3 entsprechende Darstellung eines weiteren Ausführungsbeispiels des Planetengetriebes 5, das mit einer Vorrichtung 20 ausgebildet ist, die alle Merkmale der Vorrichtung 20 des Planetengetriebes 5 gemäß Fig. 2 und Fig. 3 umfasst und zusätzlich mit einer weiteren Ölauffangrinne 41 ausgeführt ist. Die weitere Ölauffangrinne 41 ist spiegelbildlich zur Ölauffangrinne 21 ausgebildet und weist ansonsten den gleichen Aufbau sowie die gleiche Funktions- bzw. Wirkungsweise wie die Ölauffangrinne 21 auf. Des Weiteren ist die Ölauffangrinne 41 wiederum drehfest mit dem Getriebegehäuse 31 verbunden und umgibt in Umfangsrichtung einen weiteren Bereich 43 des Planetenträgers 18. Damit ist wiederum während der Rotation des Planetenträgers 18 von diesem abgeschleudertes Öl in der weiteren Ölauffangrinne 41 sammelbar. Aus der weiteren Ölauffangrinne 41 ist das gesammelte Öl in gleichem Umfang wie über die Ölauffangrinne 21 in zu Fig. 2 und Fig. 3 beschriebener Weise in Richtung des Ablasses 30 führbar und innerhalb gewünscht kurzer Betriebszeiten aus dem Getriebegehäuse 31 ausleitbar.

### Bezugszeichenliste

- 1: Flugtriebwerk
- 2: Hauptdrehachse
- 3: Lufteinlass
- 4: Bläser
- 5: Planetengetriebe
- 6: Niederdruckverdichter
- 7: Hochdruckverdichter
- 8: Verbrennungseinrichtung
- 9: Hochdruckturbine
- 10: Niederdruckturbine
- 11: Ausströmdüse
- 12: Triebwerksgondel
- 13: Nebenstromkanal
- 14: Hochdruckwelle
- 15: Niederdruckwelle
- 16: Bläserwelle
- 17: Sonnenrad
- 18: Planetenträger
- 19: Hohlrad
- 20: Vorrichtung
- 21: Ölauffangrinne
- 22: Ringnut der Ölauffangrinne
- 23: Ölzuführbereich
- 24: Richtung des abgeschleuderten Öls
- 25: Innenseite der Ölauffangrinne
- 26: Strömungsrichtung des Öls in der Ölauffangrinne
- 27: Sammelbereich
- 28: oberer Bereich der Ölauffangrinne
- 29: Auslass
- 30: Ablass
- 31: Getriebegehäuse
- 32: weiterer Auslass
- 33: Außenseite des Planetenträgers
- 34: Eintrittsöffnung
- 35: Außenseite der Ölauffangrinne
- 36: Austrittsöffnung
- 37: Kanal
- 38: Austrittsbereich
- 39: Ölsammelbereich
- 40: Planetenrad
- 41: weitere Ölauffangrinne
- 42: Bereich des Planetenträgers
- 43: weiterer Bereich des Planetenträgers
- D: Drehrichtung des Planetenträgers
- R: radialer Abstand

## Patentansprüche

1. Planetengetriebe (5), das einen drehbaren Planetenträger (18) und eine Vorrichtung (20) zum Führen von Öl mit wenigstens einer gehäusefesten Ölauffangrinne (21) aufweist, wobei die Ölauffangrinne (2) zumindest einen Bereich des drehbaren Planetenträgers (18) in Umfangsrichtung umgibt und in der während der Rotation des Planetenträgers (18) von diesem abgeschleudertes Öl sammelbar ist, **dadurch gekennzeichnet, dass** das Öl in Einbaulage der Ölauffangrinne (21) von der angreifenden Schwerkraft in der Ölauffangrinne (21) in Richtung eines unteren Sammelbereiches (27) führbar ist, der mit einem Auslass (29) ausgebildet ist, durch den Öl aus dem Sammelbereich (27) der Ölauffangrinne (21) ableitbar ist, wobei zwischen einem in Einbaulage der Ölauffangrinne (21) oberen Bereich (28) der Ölauffangrinne (21) und dem Auslass (29) des Sammelbereiches (27) in Bezug auf die Drehrichtung (D) des Planetenträgers (18) vor dem Sammelbereich (27) wenigstens ein weiterer Auslass (32) vorgesehen ist, durch den Öl aus der Ölauffangrinne (21) führbar ist.

2. Planetengetriebe (5) nach Anspruch 1, **dadurch gekennzeichnet, dass** ein radialer Abstand (R) zwischen dem der Ölauffangrinne (21) zugewandten Außenseite (33) des Planetenträgers (18) und der Ölauffangrinne (21) so ausgelegt ist, dass bei drehendem Planetenträger (18) in dem von der Ölauffangrinne (21) und dem Planetenträger (18) begrenzten Umfangsbereich eine das Öl in der Ölauffangrinne (21) in Drehrichtung (D) des Planetenträgers (18) führende Luftströmung auftritt.

3. Planetengetriebe (5) nach Anspruch 1 oder 2, **dadurch gekennzeichnet, dass** ein radialer Abstand (R) zwischen dem der Ölauffangrinne (21) zugewandten Außenseite (33) des Planetenträgers (18) und der Ölauffangrinne (21) so ausgelegt ist, dass das Öl bei drehendem Planetenträger (18) in dem von der Ölauffangrinne (21) und dem Planetenträger (18) begrenzten Umfangsbereich eine das Öl in der Ölauffangrinne (21) in Drehrichtung (D) des Planetenträgers (18) führenden Impuls aufweist.

4. Planetengetriebe (5) nach einem der Ansprüche 1 bis 3, **dadurch gekennzeichnet, dass** der weitere Auslass (32) eine auf der dem drehbaren Planetenträger (18) zugewandten Innenseite (25) der Ölauffangrinne (21) vorgesehene Eintrittsöffnung (34), eine auf der dem drehbaren Planetenträger (18) abgewandten Außenseite (35) der Ölauffangrinne (21) vorgesehene Austrittsöffnung (36) und einen die Eintrittsöffnung (34) und die Austrittsöffnung (36) verbindenden Kanal (37) umfasst, wobei eine Strömungsgeschwindigkeit des Öls beim Durchströmen der Eintrittsöffnung (34), des Kanals (37) und der Austrittsöffnung (36) wenigstens annähernd gleich bleibt.

5. Planetengetriebe (5) nach einem der Ansprüche 1 bis 4, **dadurch gekennzeichnet, dass** der weitere Auslass (32) als eine im Wesentlichen tangential durch die ringförmige Ölauffangrinne (21) verlaufende Bohrung ausgeführt ist.

6. Planetengetriebe (5) nach einem der Ansprüche 1 bis 4, **dadurch gekennzeichnet, dass** der weitere Auslass (32) als ein im Wesentlichen tangential durch die ringförmige Ölauffangrinne (21) verlaufender Schlitz ausgeführt ist.

7. Planetengetriebe (5) nach einem der Ansprüche 4 bis 6, **dadurch gekennzeichnet, dass** ein einen Bereich des Kanals (37) und die Austrittsöffnung (36) umfassender Austrittsbereich (38) des weiteren Auslasses (32) für das aus der Ölauffangrinne (21) abzuführende Öl derart ausgeführt ist, dass das Öl aus dem weiteren Auslass (32) in Richtung eines außerhalb der Ölauffangrinne (21) vorgesehenen Ölsammelbereiches (39) führbar ist, der in Einbaulage der Ölauffangrinne (21) unterhalb der Ölauffangrinne (21) angeordnet ist und in den über den Auslass (29) aus der Ölauffangrinne (21) austretendes Öl einleitbar ist.

8. Planetengetriebe (5) nach einem der Ansprüche 1 bis 7, **dadurch gekennzeichnet, dass** wenigstens eine weitere Ölauffangrinne (41) vorgesehen ist, die einen weiteren Bereich (43) des drehbaren Planetenträgers (18) oder einen Bereich eines weiteren drehbaren Bauteils in Umfangsrichtung umgibt.

9. Planetengetriebe (5) nach einem der Ansprüche 1 bis 8, **dadurch gekennzeichnet, dass** die Ölauffangrinne (21) in radialer Richtung des Planetenträgers (18) zwischen dem drehbaren Planetenträger (18) und einem Getriebegehäuse (31) angeordnet und drehfest mit dem Getriebegehäuse (31) verbunden ist.

10. Planetengetriebe (5) nach Anspruch 9, **dadurch gekennzeichnet, dass** der Wert eines radiales Abstandes (R) zwischen der Ölauffangrinne (21) und dem drehbaren Planetenträger (18) jeweils kleiner oder gleich dem Wert eines halben radialen Abstandes zwischen dem drehbaren Planetenträger (18) und dem Getriebegehäuse (31) ist.

11. Flugtriebwerk (1) mit einem Planetengetriebe (5) gemäß einem der Ansprüche 1 bis 10.
